# FASCICULE DE BREVET EUROPEEN

(11) **EP 2 265 435 B1**
(45) Date de publication et mention de la délivrance du brevet: **14.08.2013**
(21) Numéro de dépôt: 09735687.7
(22) Date de dépôt: 07.04.2009
(51) Int. Cl.: B29C 65/16, B29C 51/22, B23K 26/26, B29C 53/28, B29D 99/00, B29C 65/00

(54) **PROCEDE DE FABRICATION D'UNE STRUCTURE ALVEOLAIRE ET INSTALLATION CORRESPONDANTE**
VERFAHREN ZUR HERSTELLUNG EINER ZELLÄHNLICHEN STRUKTUR UND ENTSPRECHENDE AUSRÜSTUNG
CELL-LIKE STRUCTURE MANUFACTURING METHOD AND CORRESPONDING EQUIPMENT

(30) Priorité: 08.04.2008 FR 0801929
(43) Date de publication de la demande: 29.12.2010
(73) Titulaire: Le Monnier, Marc, 63500 Issoire (FR)
(72) Inventeur: Le Monnier, Marc, 63500 Issoire (FR)
(74) Mandataire: Chevalier, Renaud Philippe
(86) Numéro de dépôt international: PCT/FR2009/000407
(87) Numéro de publication internationale: WO 2009/130419

(56) Documents cités:
- WO-A1-92/09431
- WO-A1-2004/026572
- DE-A1- 19 748 917
- DE-C1- 10 007 496
- DE-U1-202007 000 175
- FR-A- 1 181 531
- FR-A1- 2 810 911
- FR-A1- 2 829 416
- GB-A- 2 044 168
- US-A- 2 747 064
- US-A- 5 399 221
- US-A- 5 948 172
- US-A1- 2005 237 895
- US-A1- 2006 237 401

## Description

L'invention a trait à un procédé de fabrication d'une structure alvéolaire de type nid d'abeilles en matière plastique. L'invention a également trait à une structure ainsi obtenue, ainsi qu'à une installation permettant de mettre en oeuvre untel procédé.

Les structures alvéolaires du type nid d'abeilles en matière thermofusible sont produites industriellement depuis une vingtaine d'années. Le polymère le plus utilisé est le polypropylène. (PP) du fait de sa légèreté, de son faible coût, de la facilité de sa mise en oeuvre, de son excellente tenue à l'humidité et à la plupart des agents chimiques. Son recyclage est aisé. Les nids d'abeilles en polycarbonate (PC) et en polyétherimide (PEI) occupent des marchés de niche, et il existe des productions, pour l'instant marginales, en polychlorure de vinyle (PVC), en polyéthylène téréphtalate (PET) et en triacétate de cellulose (CTA).

Le principal débouché de ces produits est le panneau sandwich, dont ils constituent l'âme. Les peaux supérieure et inférieure du sandwich sont des matériaux minces et denses dont le module d'élasticité en traction est généralement élevé. La structure sandwich avec une âme alvéolaire du type nid. d'abeilles (c'est-à-dire dont l'axe des cellules est perpendiculaire au plan de la feuille, et appelée ainsi bien que la section de la cellule ne soit pas toujours hexagonale) offre un rapport rigidité/poids et un rapport résistance à la compression/poids sans équivalents. C'est pourquoi les industries du bâtiment, de l'automobile, de l'ameublement, de l'aéronautique, du transport ferroviaire ainsi que la construction navale font appel de façon croissante à cette technique.

Des structures nid d'abeilles en polypropylène avec des cellules très larges (jusqu'à 50 mm) sont également utilisées nues, ou avec un non tissé thermocollé sur leur surface pour empêcher le colmatage des alvéoles, dans les domaines des travaux publics et de l'aménagement paysager : remblais allégés, gestion des eaux pluviales.

L'âme en nid d'abeilles est généralement réalisée par extrusion de tubes (WO 94/25258) ou d'éléments de section rectangulaire (WO 87/00119) présentant des alvéoles hexagonales. Les tubes reçoivent par coextrusion un gainage externe d'un polymère à plus bas point de fusion qui servira de colle. Ces tubes ou ces poutres sont ensuite coupés à la longueur voulue et empilés pour former des blocs. Dans le cas des tubes un passage dans un long four à air chaud permet de fondre la colle et, après refroidissement, on obtient un bloc consolidé, facile à découper avec une scie à ruban pour obtenir des plaques à l'épaisseur souhaitée. Les poutres sont elles soudées les unes contre les autres par une lame chaude (soudure miroir).

Ces procédés présentent un certain nombre d'inconvénients importants : l'utilisation d'une colle thermoplastique à bas point de fusion limite la résistance thermomécanique de la structure alvéolaire à un niveau nettement inférieur à celle du polymère constitutif de ladite structure. De plus, pour supporter la pression exercée sur ses flancs par les mâchoires qui le transportent au travers du four alors même que l'air chaud le ramollit, le bloc de nid d'abeilles tubulaire doit avoir une densité minimum. Elle est de 80 kg/m³ avec du polypropylène dans le cas des alvéoles de petites dimensions (typiquement 8 mm de section) pour l'application panneau sandwich. Or, pour la grande majorité des applications, on n'a guère besoin de plus de 55 kg/m³. Ce problème technique empêche donc d'optimiser le poids et le coût du produit fini.

Autre conséquence, la découpe du bloc en tranches par fil chaud, plus esthétique que la découpe par scie à ruban, ne peut se faire qu'à une vitesse maximale de 10 cm par minute et avec un risque de dégradation thermique dans le cas d'un bloc de polypropylène de densité 80 kg/m³, et elle n'est donc pas utilisée. Elle devient avantageuse dans le cas de nids d'abeilles plus légers ; ainsi on peut atteindre 30 cm par minute avec un bloc de polystyrène de densité 55 kg/m³. D'autre part, l'utilisation de conteneurs d'empilement et de mâchoires ne permet pas d'obtenir des blocs d'une longueur supérieure à 3 mètres ce qui complique et, dans certains cas, exclut la fabrication de panneaux de grande dimensions. Il y a également le problème posé par les vis d'extrusion, qui sont conçus pour un type de polymère donné ce qui empêche le fabriquant de proposer du nid d'abeilles dans des matières très différentes. Enfin, il est impossible de transporter un produit semi-fini compact et de l'assembler sous forme de nid d'abeilles avec un moyen industriel léger au plus proche des gros utilisateurs. Un camion remorque classique ne pouvant guère emporter plus de 60 m³ de nid d'abeilles, les coûts de transport deviennent vite prohibitifs.

Il existe des procédés pour fabriquer en continu et directement à l'épaisseur souhaitée des structures alvéolaires. WO-A-9841388 décrit l'extrusion, à l'aide d'une filière à plusieurs fentes, de feuilles parallèles en matériau thermofusible avec réalisation de compartiments entre les feuilles. En alternant, dans un compartiment sur deux, une dépression et un remplissage par un fluide, on réalise une structure alvéolaire. Ce procédé est plus économique que les précédents uniquement pour une épaisseur de plaque élevée. Or, cette dernière est limitée par la complexité de la technique à une trentaine de millimètres. En outre la densité du produit obtenu est plus élevée.

WO-A-0032382 décrit une structure en nid d'abeilles réalisée par thermoformage rotatif sous vide. Deux zones thermoformées forment des demi-alvéoles et sont séparées par une zone plane servant de ligne de pliage de la feuille selon la laize. Le pliage s'effectue en accordéon de manière à rapprocher les demi-alvéoles qui, une fois juxtaposées, forment une structure en nid d'abeilles. Les extrémités des alvéoles sont recouvertes par les zones planes. Cette étape de fabrication de l'âme en nid d'abeilles nécessite, pour que la structure soit maintenue en forme, qu'elle soit suivie immédiatement d'une étape de collage des peaux formant les faces extérieures du panneau.

En d'autres termes, bien que la connexion des parois des demi-alvéoles soit envisagée dans WO-A-0032382, ce procédé nécessite la réalisation complète du panneau et non pas de la seule âme en nid d'abeilles. De plus il ne permet pas de moduler l'épaisseur, qui reste très limitée du fait du thermoformage sur un cylindre.

De plus, on connaît de WO 2004/026572 A un procédé de fabrication d'une structure alvéolaire en nid d'abeilles, formée de plusieurs feuilles d'un matériau thermoplastique assemblées les unes avec les autres, procédé dans lequel on réalise des zones pourvues de reliefs dans chaque feuille, et on assemble chaque feuille libre à une feuille adjacente d'un bloc intermédiaire formé par les différentes feuilles assemblées entre elles au préalable, en soudant au moins certaines des arêtes en contact de cette feuille libre et de cette feuille adjacente avec une source laser.

FR 2 829 416 A concerne un procédé de fabrication d'une structure en nid d'abeilles en métal léger ayant une largeur prédéfinie correspondant à l'épaisseur désirée de la structure en nid d'abeilles par soudage au laser.

La présente invention entend apporter une solution aux problèmes techniques exposés précédemment.

A cet effet, elle a pour objet un procédé de fabrication d'une structure alvéolaire en nid d'abeilles, formée de plusieurs feuilles d'un matériau thermoplastique assemblées les unes avec les autres, procédé dans lequel on réalise des zones pourvues de reliefs dans chaque feuille, et on assemble chaque feuille libre à une feuille adjacente d'un bloc intermédiaire formé par les différentes feuilles assemblées entre elles au préalable, en soudant au moins certaines des zones planes en contact de cette feuille libre et de cette feuille adjacente avec une source laser, selon une ligne continue parallèle à l'axe des reliefs, ledit procédé de fabrication étant selon l'une quelconque des revendications 1 à 8.

En soudant feuille à feuille en position verticale on construit un bloc dont la longueur peut être infinie et la densité très faible. En outre la soudure est plus résistante mécaniquement et en température qu'un collage thermoplastique.

Selon des aspects avantageux mais non obligatoires de l'invention, le procédé peut incorporer une ou plusieurs des caractéristiques suivantes :
- Le matériau thermoplastique est un matériau thermoformable, et on réalise les zones pourvues de reliefs par thermoformage sous vide de chaque feuille, notamment au moyen d'un moule cylindrique en rotation.
- Le thermoformage sous vide de chaque feuille est réalisé avec un moule cylindrique en rotation, plutôt qu'avec un moule plan, de façon à pouvoir produire une longueur variable de feuille thermoformée.
- Toute la surface du cylindre est divisée à espace régulier en cannelures gravées en creux, parallèles à son axe et qui s'étendent presque d'une extrémité à l'autre de la largeur du cylindre. La section de ces cannelures dans un plan perpendiculaire à l'axe du cylindre est un demi-hexagone régulier.
- On réalise le thermoformage sous vide d'une bande, puis on découpe cette bande de manière à former différentes feuilles libres. A cet effet, en sortie de ligne de thermoformage la bande plastique cannelée est découpée par un massicot à une longueur choisie et les feuilles obtenues sont par exemple empilées les unes sur les autres dans un conteneur.
- On réalise les zones pourvues de reliefs en marquant par compression des lignes alternativement sur une première face et une face opposée de la feuille, puis en exerçant, de part et d'autre de ces lignes de pliage, des efforts de pression de manière à provoquer le pliage de cette feuille. A titre d'exemple, on peut marquer par compression des lignes parallèles à la largeur de la feuille, équidistantes entre elles, puis on exerce de part et d'autre de ces lignes de pliage des efforts de pression dans des directions opposées de manière à provoquer le pliage de la feuille dans le sens longitudinal selon un motif semi hexagonal.
- Le mode de réalisation décrit dans le paragraphe précédent constitue une alternative au thermoformage sous vide. A titre d'exemple non limitatif, destiné à illustrer ce mode de réalisation alternatif, on peut plier la feuille à froid, en particulier selon l'enseignement de

FR 1532509, en marquant sur ses surfaces, par la pression de cylindres, des lignes parallèles à la largeur de la feuille et équidistantes entrewelles. Un cylindre muni de fins reliefs rectilignes situé au dessus de la feuille vient marquer par compression deux lignes consécutives sur la face supérieure de la feuille, puis un cylindre identique placé sous la feuille vient marquer à la suite de ces deux lignes deux nouvelles lignes sur la face inférieure de la feuille. Et le cycle se répète sans fin. Un ensemble d'actionneurs (buses d'air comprimé, rouleaux cannelés) placés au dessus et au dessous de la feuille provoque le passage de la feuille plane à une forme tridimensionnelle, à profil longitudinal semi hexagonal, par pliage selon les lignes inscrites auparavant sur les faces de la dite feuille. Contrairement au thermoformage sous vide le pliage ne provoque pas d'étirement de matière. Il n'y a donc pas de problème de retrait après refroidissement, et la feuille a partout la même épaisseur. Et à la différence du thermoformage sous vide il n'est pas nécessaire que le matériau constitutif de la feuille soit étanche à l'air.
- On réchauffe chaque feuille libre munie de reliefs, avant de la souder à la feuille adjacente du bloc intermédiaire. A cet effet, sur le poste de soudage le bras d'un robot manipulateur vient par exemple saisir un format dans le conteneur et présente l'une de ses faces à un panneau de radiants infrarouges.
- La feuille ainsi préchauffée est introduite verticalement dans la machine de soudage, où elle va glisser par gravité entre deux plans verticaux constitués l'un par des guides métalliques fixes épousant la forme des reliefs en creux de la feuille et l'autre par la paroi du bloc de nid d'abeilles en formation. Grâce à un dispositif mécanique le bloc a effectué un petit mouvement de translation sur le côté de façon à ce que les reliefs du bloc et de la feuille soient en opposition de phase et que les parties planes de ces reliefs soient parfaitement en vis-à-vis.
- Le bloc effectue un déplacement pour mettre la feuille juste introduite en pression contre les guides métalliques. Les parties planes des reliefs en vis-à-vis du bloc et de la feuille sont désormais en pression les unes contre les autres.
- Dans l'espace situé de l'autre côté des guides métalliques se trouve un plateau horizontal sur lequel est fixé un ensemble de fibres optiques délivrant chacune un faisceau laser centré au milieu de l'espace séparant deux guides métalliques consécutifs. On va donc fixer la nouvelle feuille sur le bloc par un ensemble de lignes de soudure parallèles passant par tous les reliefs du bloc et de la feuille qui sont en contact mais seulement par ces reliefs. Pour certaines applications qui ne requièrent pas des performances mécaniques très élevées on pourra ne souder que certaines lignes.
- on utitise, en tant que source laser, un ensemble de diodes laser émettant dans une longueur d'onde comprise entre 800 et 1 200 nanomètres. Avantageusement, on achemine, par des fibres optiques, le rayonnement électromagnétique issu de la source laser.

En effet la largeur du faisceau, le rendement élevé, la grande durabilité et le faible encombrement alliés à un coût modéré font par exemple des diodes laser un outil idéal pour générer des lignes de soudure de .2 à 4 mm de large. Le principe de la soudure repose sur l'échauffement de la matière par un rayonnement électromagnétique. La soudure de deux feuilles plastiques maintenues en pression l'une sur l'autre est réalisée par conduction.

Cela permet de travailler avec des feuilles monocouche en matière 100% recyclée contenant du noir de carbone. La vitesse de soudure exprimée en mètres par minute sera d'autant plus élevée que l'épaisseur de la feuille est faible. Le procédé est très bien adapté à une épaisseur de 200 microns et moins. Le principe est d'élever avec précaution la température de la feuille plastique jusqu'à donner suffisamment de mobilité aux macromolécules qui la composent (dans le cas d'un polymère cristallin cela se traduit par une fusion franche de la matière), en diffusant ainsi les calories par conduction dans l'autre feuille. Comme précédemment, il convient d'exercer une pression sur les deux feuilles, pour qu'il y ait interpénétration des macromolécules d'une feuille à l'autre. Appliquer directement le faisceau laser qui sort de la fibre optique revient à concentrer toute l'énergie dans un spot de 2 à 4 mm de diamètre. Cela provoque l'oxydation de la feuille absorbante qui est ici exposée au contact de l'air, c'est à dire la dégradation irréversible du polymère. Il est donc avantageux d'appliquer cette énergie graduellement sur un temps plus long, sans réduire la vitesse de soudure. Ceci revient à « allonger » le spot en un segment de même largeur et de quelques centimètres de long, que l'on déplace le long de la ligne à souder. Au cours de son déplacement au dessus d'un point donné de la feuille, la température va s'élever progressivement jusqu'à dépasser le point de ramollissement du polymère. Cette élévation progressive de la température se communique à la feuille du dessous, et il suffit d'appliquer rapidement une forte pression sur la ligne de soudure puis de laisser refroidir.

Concrètement on génère par exemple, à partir de la source laser, un faisceau laser, on transforme ce faisceau laser en un segment laser, dont la largeur est sensiblement voisine du diamètre de ce faisceau, et dont la longueur est très supérieure à ce diamètre, et on déplace ce segment laser le long de ladite ligne continue. On dirige le faisceau laser vers un miroir cylindrique pourvu de facettes et animé d'un mouvement de rotation, de façon à générer ledit segment.

Chaque facettes qui reçoit le faisceau le projette sur la feuille plastique en lui faisant ainsi parcourir un segment de droite. La rotation du miroir est suffisamment rapide pour que l'on génère à partir du spot une « ligne énergétique ». La grande uniformité de la distribution de l'énergie du laser à l'intérieur d'un segment de 3 à 4 mm de large et d'une quinzaine de centimètres de long permet d'élever la température de la feuille plastique jusqu'à rendre les macromolécules mobiles de façon plus progressive et mieux maîtrisée que ne le ferait le spot produit directement par le faisceau laser à la surface de la feuille. Pour des polymères d'usage courant tels que le polypropylène et le polystyrène, une puissance de l'ordre de 100 W par ligne de soudure est suffisante pour garantir une cadence de production élevée. Bien entendu ce dispositif permet également de souder des feuilles bicouche par transparence sans qu'il soit nécessaire d'apporter la moindre modification à l'installation.
- Par un mouvement vertical du plateau cet ensemble de segments énergétiques vient souder la feuille sur le bloc, en créant des lignes de soudure à l'intérieur des surfaces planes en contact. Pour permettre une interpénétration de matière on presse chaque feuille libre contre la feuille adjacente, pendant l'étape de soudage par laser et immédiatement après cette étape le long de ladite ligne continue
- Le bloc ainsi augmenté d'une feuille fait un déplacement dans le sens de la production puis un petit déplacement dans le sens transversal, pendant qu'une nouvelle feuille est introduite par le haut.
- Le cycle précédent recommence.

Selon une caractéristique avantageuse, du procédé selon l'invention la structure alvéolaire présente une densité inférieure à 80 kg/m³, en particulier à 60 kg/m³, avec des alvéoles dont la plus grande dimension transversale est inférieure à 12 mm.

L'invention a également pour objet une installation pour la mise en oeuvre du procédé ci-dessus, comprenant :
- des moyens de formation de reliefs dans chaque feuille ;
- des moyens de mise en place de chaque feuille libre, au voisinage de la feuille adjacente du bloc intermédiaire ;
- des moyens de soudage de cette feuille libre avec la feuille 'adjacente ;
- des moyens de mise en pression de chaque feuille libre avec cette feuille adjacente, ladite installation étant selon la revendication 9 ou 10.

Selon d'autres caractéristiques :
- les moyens de soudage comprennent une source laser, propre à générer un faisceau laser, ainsi que des moyens de transformation de ce faisceau en un segment laser, d'une longueur bien supérieure au diamètre du faisceau laser.
- les moyens de mise en pression comprennent des premiers organes de mise en pression, propres à mettre le bloc intermédiaire en contact avec la feuille libre, ainsi qu'un organe de mise en pression complémentaire, propre à pénétrer dans les alvéoles dudit bloc intermédiaire et à accroître la pression entre la feuille libre et la feuille adjacente le long de ladite ligne continue.

L'invention sera mieux comprise et d'autres avantages de celle-ci apparaîtront plus clairement à la lecture de la description qui va suivre d'un procédé conforme à l'invention et d'une installation de mise en oeuvre de ce procédé, donnée uniquement à titre d'exemple et en se référant aux dessins annexés dans lesquels :
- la figure 1 est une vue schématique en coupe longitudinale partielle d'une installation de thermoformage par cylindre rotatif permettant à une feuille plastique de reproduire des ondulations de forme semi hexagonale.
- la figure 2 décrit des alvéoles de thermoformage du cylindre.
- la figure 3 est une vue schématique simplifiée d'une partie de feuille, une fois celle-ci thermoformée dans l'installation de la figure 1.
- la figure 4 est une vue schématique d'une machine de fabrication de nid d'abeilles par soudage laser de feuilles plastiques thermoforméés.
- les figures 5, 6, 7, 8, 9 et 10 sont des sections dans un plan horizontal de l'intérieur de la soudeuse, qui montrent l'introduction de la

feuille, sa mise en pression contre le bloc et le soudage par les rayons laser.
- la figure 11 explique comment est généré le segment énergétique et par quel moyen on exerce une forte pression sur la ligne de soudure en fusion.
- la figure 12 est une vue de dessus du plateau qui porte le dispositif de soudure optique.
- La figure 13 est une vue en perspective cavalière d'une structure alvéolaire conforme à l'invention.
- les figures 14 à 16 montrent quelques exemples de cellules de nids d'abeilles que l'on peut obtenir selon l'invention.

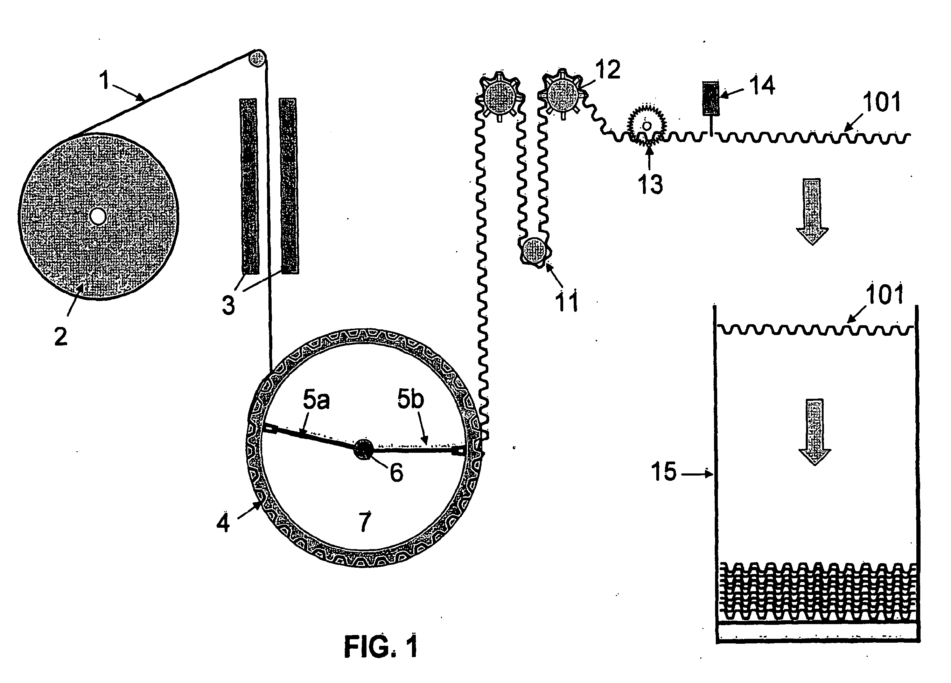

L'installation représentée à la figure 1 comprend, en partie gauche de cette figure, une bande 1 d'un matériau en feuille issu d'une bobine 2. Ce matériau en feuille étanche à l'air est réalisé en un matériau thermoplastique qui est thermoformable sous vide, d'une épaisseur comprise entre 0,1 et 1 mm (ces valeurs ne sont pas limitatives). Un tel matériau thermoformable est choisi, par exemple, parmi les polyoléfines (polypropylène, polyéthylène), les polyesters, les -polystyrènes, le polycarbonate, l'acrylonitrile butadiène styrène, le polyétherimide et le polyéther éther cétone. Il peut être renforcé de fibres de verre, de carbone ou de fibres aramides qui accroissent les performances thermomécaniques du produit final.

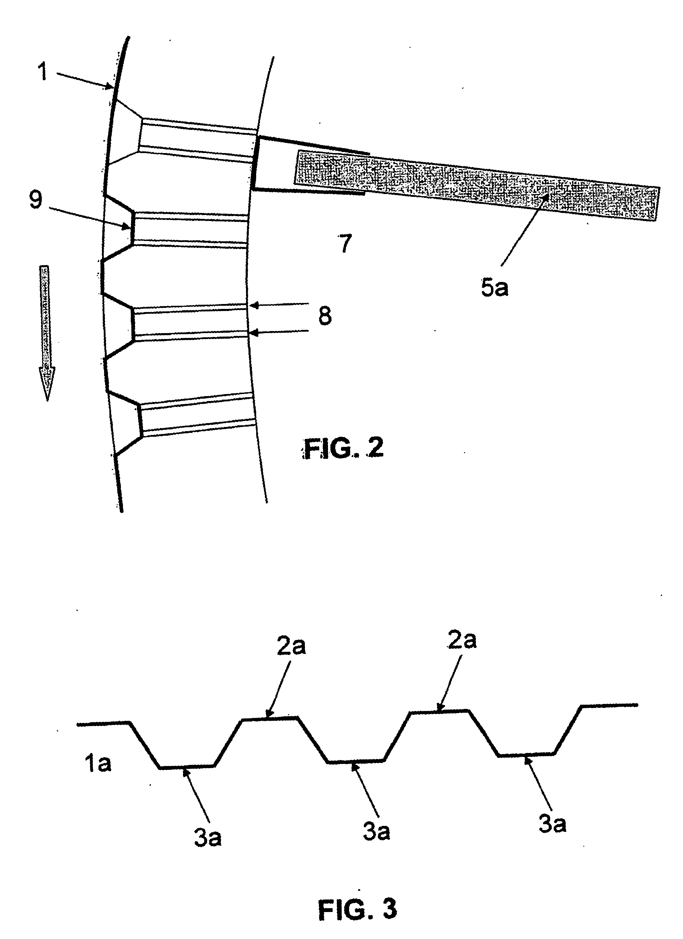

La bande est déroulée en position verticale entre deux panneaux de radiants infrarouges 3 qui élèvent sa température jusqu'à quelques degrés en dessous de son point de fusion. Par gravité la bande chaude se dépose à la surface d'un cylindre de thermoformage 4 en rotation lente. Un dispositif non représenté assure l'étanchéité entre la surface du cylindre et la bande. Le cylindre comporte une chemise en aluminium d'environ 30 mm d'épaisseur refroidie par circulation d'eau. La surface a été usinée de façon à graver en creux des cannelures rectilignes, toutes identiques, et parallèles à l'axe du cylindre. Un ensemble de volets 5a et 5b solidaires de l'axe fixe 6 permet de diviser l'intérieur du cylindre en deux caissons étanches. Le caisson inférieur 7 est raccordé à une pompe à vide en fonctionnement permanent. Ainsi lorsque, dans son mouvement de rotation, le cylindre amène la bande chaude 1 au niveau du caisson 7, l'air compris entre le cylindre et la feuille est brusquement aspiré au travers des évents 8 et cette dernière est plaquée en fond de cavité de la cannelure 9 (figure 2). Elle reproduit alors parfaitement la surface du moule cylindrique qu'elle ne quittera qu'après s'être suffisamment refroidie en passant devant l'autre extrémité du caisson 7.

On obtient donc une bande cannelée 1a visible eri coupe longitudinale à la figure 3 et pourvue de sommets 2a et de creux 3a. Ces zones de reliefs 2a et 3a sont planes. En d'autres termes, la bande thermoformée 1a ressemble à une tôle ondulée. Elle passe au travers d'un accumulateur 11 puis devant un cylindre compteur cannelé 12. Ce dernier commande le massicot 14 qui débitera la bande 1a à la longueur désirée après découpe des lisières par une paire de disques coupant 13. On obtient donc, à l'issue de la découpe de cette bande 1a, différentes feuilles cannelées identiques, affectées de la référence 101, qui sont déposées dans un conteneur 15, au moyen d'un dispositif non représenté.

Il est important de noter que si cette ligne de thermoformage permet de passer rapidement d'une matière plastique à une autre, il convient de disposer de cylindres spécifiquement usinés pour un polymère donné, le taux de retrait de la feuille variant d'un polymère à l'autre. Par un changement rapide de cylindre on garantit les mêmes caractéristiques dimensionnelles aux formats obtenus.

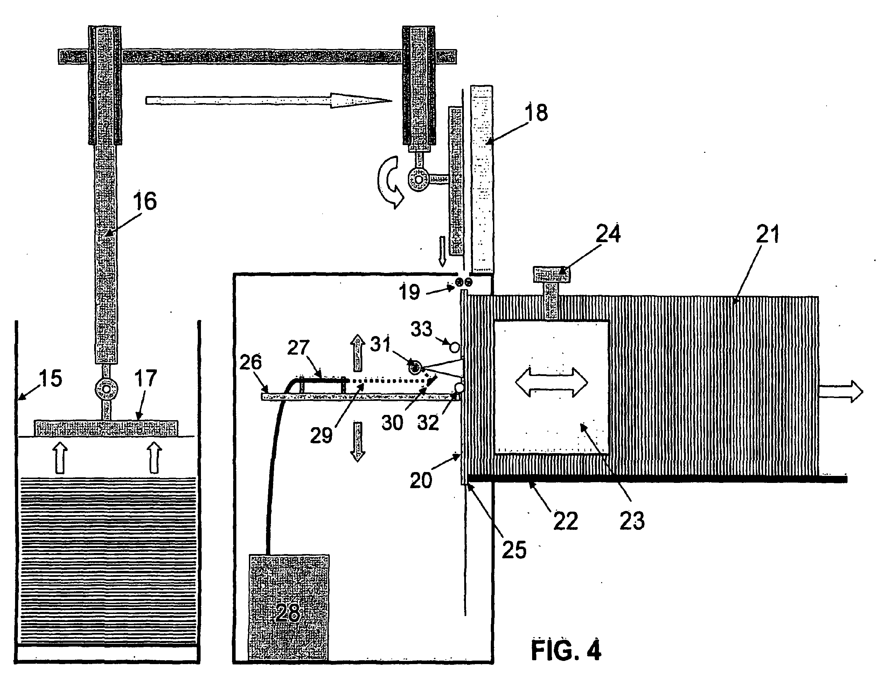

Le conteneur 15 est positionné par des centreurs au sol devant la machine de soudage laser, comme indiqué sur la figure 4. Un bras manipulateur 16 muni à son extrémité d'un plateau préhenseur 17 prélève successivement chaque feuille au sommet de la pile, pour la présenter au panneau de radiants infrarouges 18. Le but est de porter la température de la feuille thermoformée à la valeur la plus élevée possible tout en évitant de provoquer sa déformation. A l'intérieur de la machine de soudage un dispositif de chauffage de l'air (non représenté) permet de maintenir cette température. Le but est de réduire le temps nécessaire à la soudure par laser en démarrant au point le plus élevé possible dans la courbe de montée en température.

Puis, le bras transmet la feuille chaude à un jeu de galets en rotation 19 qui l'entraînent à l'intérieur de la soudeuse. Cette feuille descend par gravité entre des guides en acier 20 et la paroi verticale du bloc de nid d'abeilles intermédiaire 21 jusqu'à arriver en butée sur un plateau horizontal lisse en acier inoxydable 22. Ce bloc intermédiaire 21 est formé des différentes feuilles 101, assemblées préalablement. Deux convoyeurs à bande 23, disposés verticalement, exercent une pression permanente sur les flancs du bloc et lui communiquent des mouvements d'avancée et de recul. Ces deux convoyeurs sont solidaires d'un portique 24 qui lui les déplace transversalement, et alternativement de gauche à droite, de façon à obtenir un décalage égal aux ¾ de la longueur d'une cellule hexagonale, qui permet au bloc et à la feuille de venir en opposition de phase.

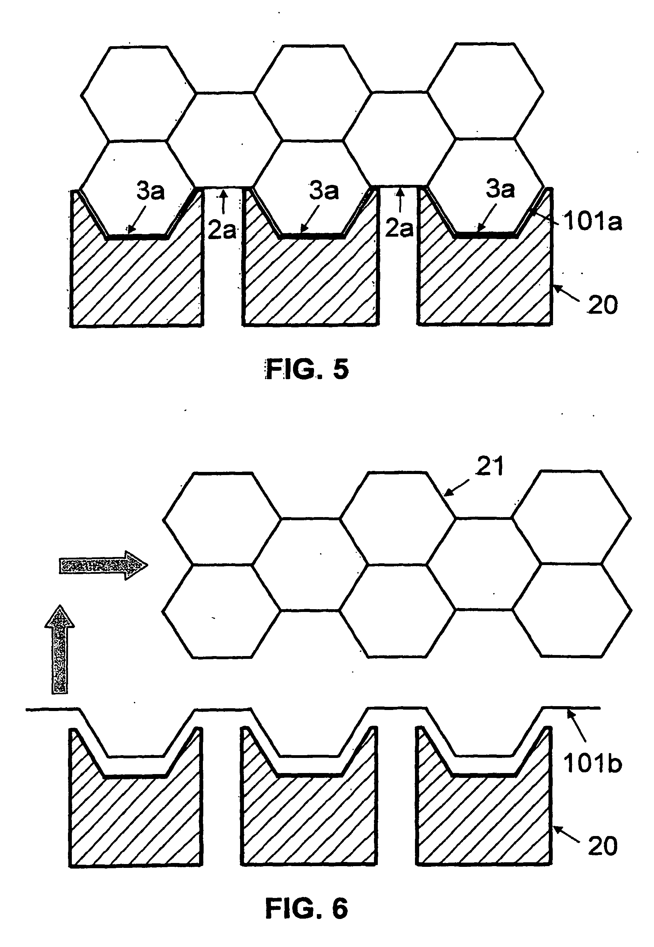

La figure 5 est un agrandissement d'une section dans un plan horizontal qui montre le bloc intermédiaire, auquel on vient d'ajouter une dernière feuille 101a, pourvue de ses sommets 2a et de ses creux 3a. La figure 6 illustre les actions simultanées d'avancée du bloc intermédiaire 21 sous l'effet des convoyeurs latéraux 23 et de translation latérale de ce bloc de 3/4 d'une longueur de cellule sous l'effet du portique, puis l'insertion d'une feuille supplémentaire, dite feuille libre 101b.

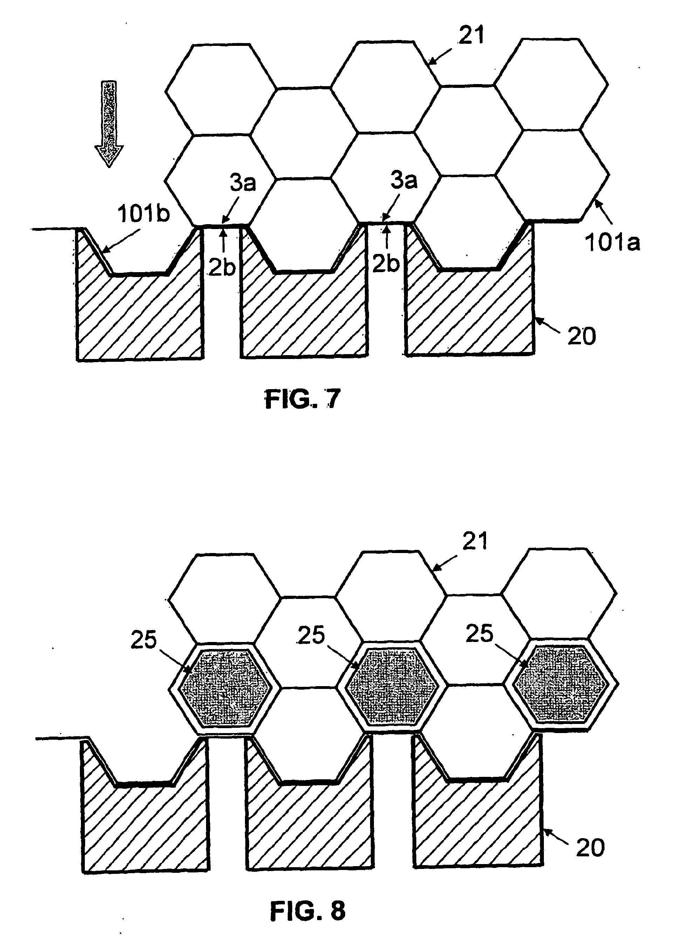

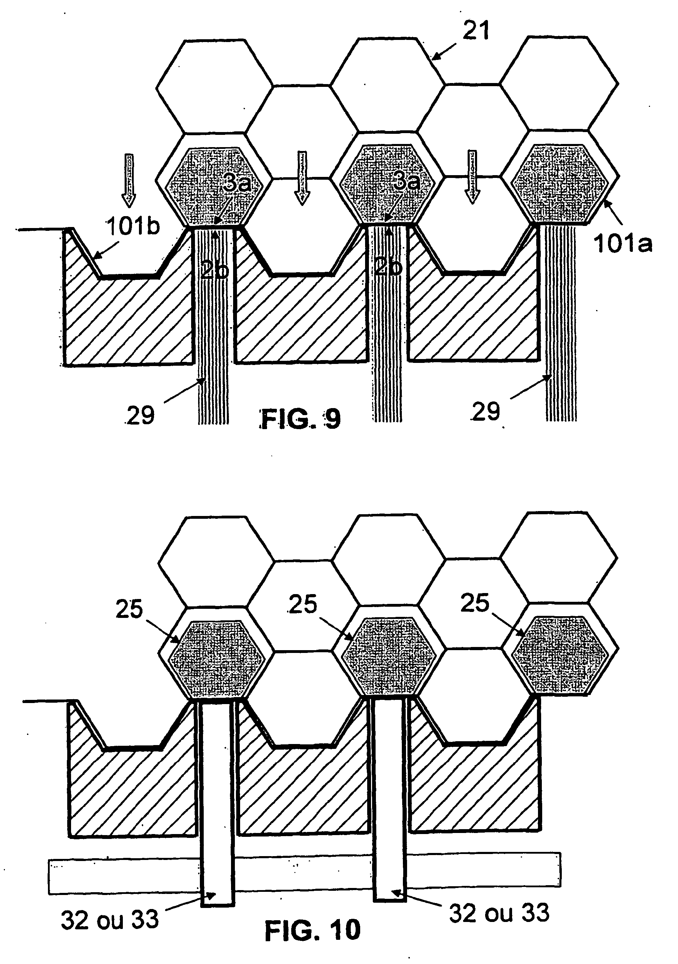

La figure 7 illustre le mouvement de recul du bloc 21, qui met en contact les zones planes des reliefs 3a et .2b, appartenant respectivement à la dernière feuille 101 a du bloc 21, et à la feuille libre 101b. Puis, les profilés en acier ou en carbone pultrudé d'une herse 25 mue par des vérins pneumatiques s'introduisent à l'intérieur des alvéoles de la dernière rangée du bloc 21, comme le montre la figure 8. Dès qu'elle a traversé toute la hauteur du bloc 21 la herse est plaquée contre les guides 20 de façon à bien mettre en pression les zones planes des reliefs 3a et 2b (figure 9). Les faisceaux laser 29 viennent alors fondre ces surfaces de contact entre les feuilles 101a et 101b. Leur passage est immédiatement suivi de celui d'une molette rotative 32 ou 33 qui exerce ponctuellement une forte pression sur les parties très ramollies pour provoquer une interpénétration de matières entre les deux feuilles, tandis que la herse 25 assure la contre-pression (figure 10).

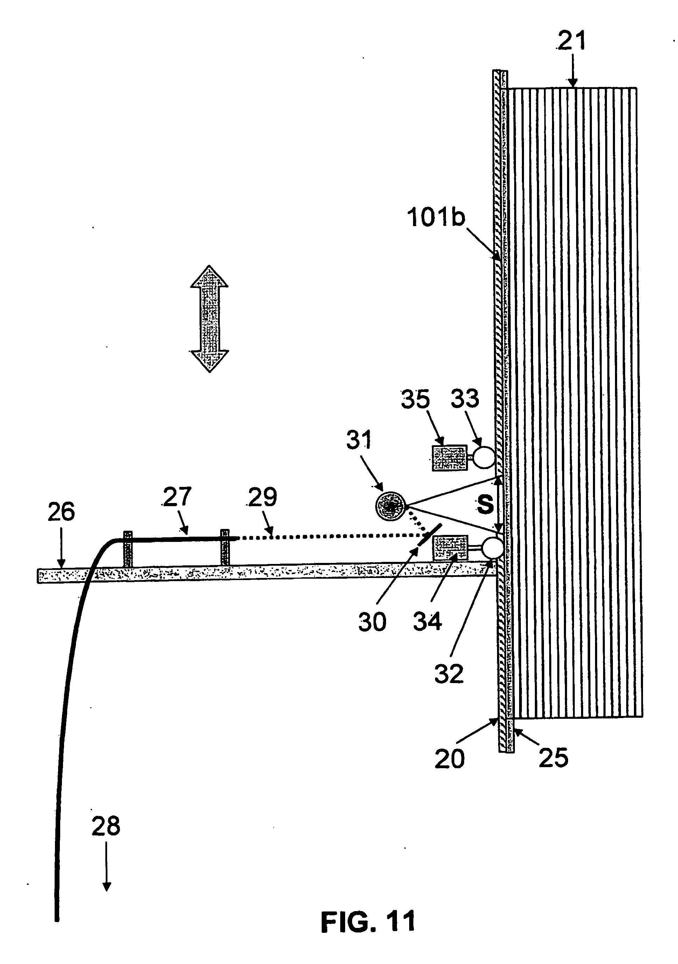

La figure 11 présente un plateau 26 mû par des vérins s'élevant à une vitesse uniforme en partant du bas du bloc pour atteindre son sommet. Lors du cycle suivant il effectuera un mouvement inverse. Sur ce plateau sont montées des fibres optiques 27 qui acheminent le rayonnement électromagnétique généré par les sources laser à diodes 28. La fibre optique envoie un faisceau laser 29 sur un miroir de renvoi 30 qui le transmet au miroir rotatif multi facettes 31. Ce dernier génère, à la surface de la feuille 101b mise en appui sur les guides en acier 20 par la pression exercée par le bloc 21 et la herse 25, un segment énergétique S d'une largeur égale au diamètre du spot, soit 2 à 4 mm, et d'une longueur que l'on pourra faire varier entre 10 et 15 cm.

Les molettes rotatives 32 et 33 ont une largeur égale à celle que l'on aura choisie pour le segment. Elles sont munies d'un boudin en caoutchouc, ou d'une couronne lisse en TEFLON dans le cas où l'on constaterait un encrassement progressif. Il y a une molette pour chaque ligne de soudure, et chaque ligne correspond sensiblement au centre de la zone plane délimitée par les reliefs en contact 2b et 3a. Lorsque le mouvement du plateau 26 est ascensionnel un ensemble de vérins pneumatiques 34 met les molettes 32 en pression contre la feuille au niveau des reliefs 2b et 3a alors que les roulettes 33 restent en retrait. A l'inverse, lorsque le plateau descend, ce sont les molettes 33 qui viennent rouler sur les lignes de soudure sous la pression des vérins 35 alors que les roulettes 32 sont en retrait.

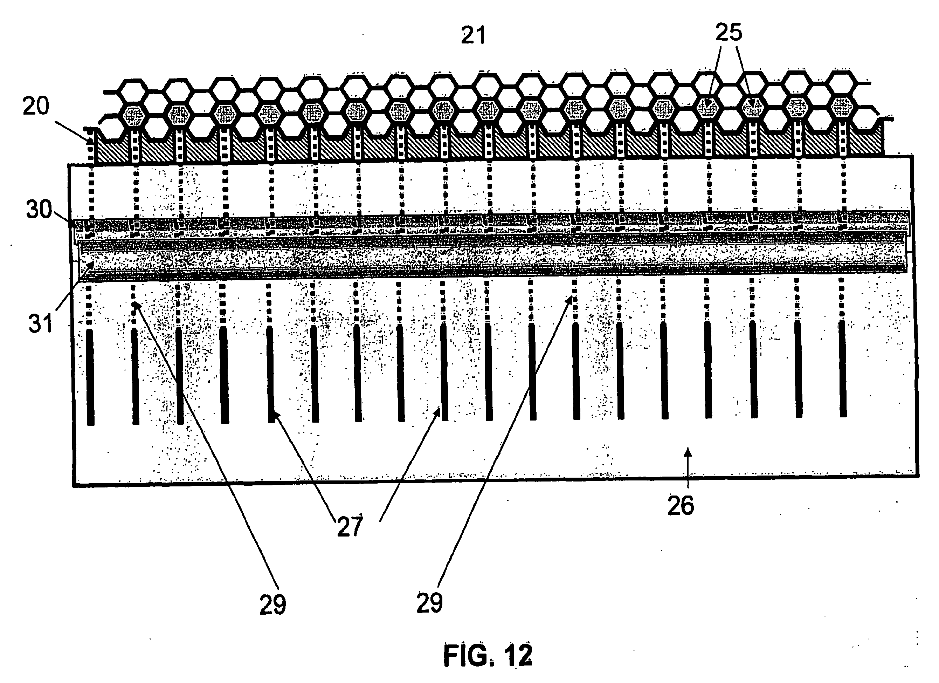

La figure 12 est une vue de dessus (partielle) du plateau montrant le positionnement des fibres optiques 27, des rayons laser 29, du miroir de renvoi 30, du miroir rotatif 31. Pour une meilleure compréhension on n'a pas représenté les molettes 32, 33 et les vérins 34, 35. Dès que le plateau 26 est arrivé en bout de course, les convoyeurs latéraux 23 font avancer le bloc 21 et une nouvelle feuille libre, à savoir non encore assemblée, est introduite par le haut de la machine. Le cycle recommence.

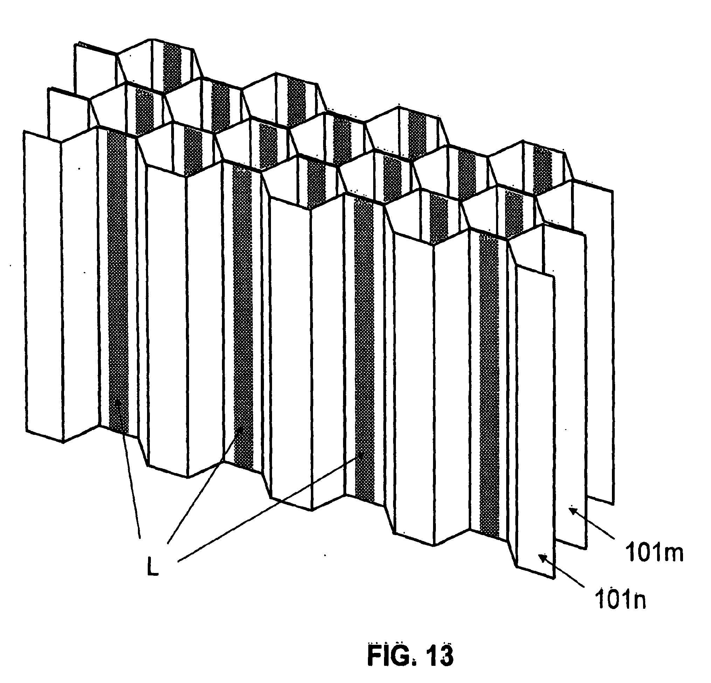

La figure 13 illustre une structure alvéolaire en nid d'abeilles, conforme à l'invention, une fois réalisée selon le procédé décrit ci-dessus. Cette structure est formée de différentes feuilles assemblées entre elles, les deux dernières feuilles adjacentes étant affectées des références 101m et 101n. De plus, cette figure 13 illustre les lignes continues de soudage, parallèles à l'axe des reliefs et notées L, qui permettent l'assemblage de ces deux feuilles adjacentes au niveau de leurs zones planes en contact.

Chaque ligne L s'étend sensiblement sur l'intégralité de ces zones planes en contact, en d'autres termes sur toute la hauteur de la structure. Comme indiqué précédemment, certaines zones planes en contact peuvent ne pas être soudées, notamment dans le cas où une très haute résistance mécanique n'est pas recherchée.

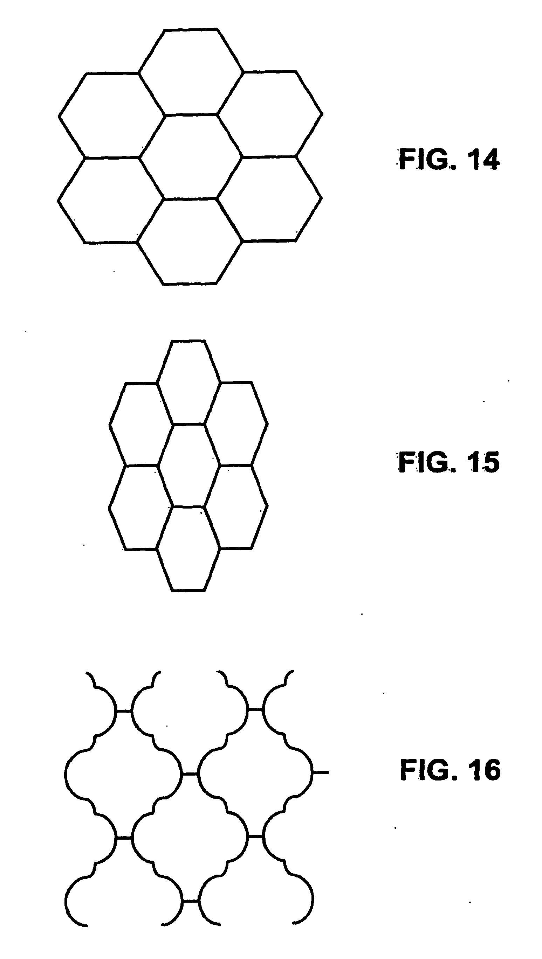

Avec l'installation utilisée dans le cadre de l'invention, il est possible de réaliser des cellules de la structure en nid d'abeilles dont la section n'est pas un hexagone régulier, à condition d'usiner un cylindre de thermoformage 4 et les guides en acier 20 correspondants. Les figures 14 à 16 donnent quelques exemples de formes d'alvéoles susceptibles d'être utilisées dans le cadre de l'invention, les deux dernières permettant une déformation de la plaque de nid d'abeilles dans au moins une direction donnée.

Les blocs de nid d'abeilles obtenus avec le procédé décrit précédemment seront avantageusement découpés en plaques par un ensemble de fils chaud. La fusion provoque une légère accumulation de matière sur les surfaces, ce qui augmente la surface de contact avec les peaux de la structure sandwich et accroît par conséquent la cohésion de cette dernière. Les peaux sont décoratives (stratifié, bois) dans le cas de la réalisation de mobilier et de cloisons, notamment pour les intérieurs de bateaux de plaisance. Elles sont structurelles (composite, tôle acier) dans le cas de pièces automobile et ferroviaire. Elles sont à la fois structurelles et décoratives (aluminium laqué, composite revêtu d'un gelcoat) lorsqu'il s'agit de faire des parois de remorques de camion, de camping car, de nacelle d'éolienne... Mais la plaque de nid d'abeilles peut aussi servir de noyau creux à une structure composite. Dans ce cas elle est revêtue d'un film d'étanchéité et d'un non tissé d'accrochage de la résine qui va être appliquée par contact ou infusion, résine elle-même renforcée par une ou plusieurs couches de mat de verre déposé à la surface de la plaque de nid d'abeilles.

En outre des blocs à grosse maille hexagonale, fabriqués à partir d'un polymère imputrescible, seront avantageusement utilisés par l'industrie du B.T.P. pour la rétention des eaux pluviales.

Quelle que soit l'application industrielle, le nid d'abeilles plastique soudé par laser apporte une remarquable résistance à la compression, à la flexion et au cisaillement tout en allégeant les structures existantes. Le procédé de fabrication permet d'utiliser la plupart des polymères thermoplastiques et d'obtenir ainsi des blocs d'une légèreté et d'une robustesse auparavant inaccessibles. Il permet également de réaliser des pièces de très grande longueur en un seul morceau.

Enfin, le faible encombrement et la légèreté de l'installation de soudage et du poste de découpe par fil chaud permettent d'installer ces moyens au plus proche des gros utilisateurs. On ne transportera dès lors sur de grandes distances que les feuilles munies de reliefs, empilées creux dans creux, dans des conteneurs spécifiques, ce qui réduit considérablement le coût logistique. En d'autres termes, on peut réaliser, en un premier emplacement, les opérations de cannelage et de découpe. En revanche, les opérations suivantes, notamment de soudage, des différentes feuilles, pourront être réalisées en un emplacement différent, éventuellement très éloigné du premier emplacement évoqué ci-dessus.

Dans le mode de réalisation décrit et représenté en référence aux figures annexées, on met en oeuvre le thermoformage sous vide d'un matériau thermoplastique étanche à l'air, qui se prête par conséquent à une telle opération de thermoformage. Cependant, à titre de variante non illustrée, on peut utiliser un matériau thermoplastique non étanche à l'air, tel que par exemple un non tissé, une grille ou une feuille perforée. Dans ce cas, comme décrit précédemment, on peut réaliser les zones pourvues de reliefs, au sein de chaque feuille, par un procédé différent du thermoformage sous vide. Ce procédé alternatif peut, à titre non limitatif, être conforme à l'enseignement de FR 1532509.

## Revendications

1. Procédé de fabrication d'une structure alvéolaire en nid d'abeilles, formée de plusieurs feuilles (101) d'un matériau thermoplastique assemblées les unes avec les autres, procédé dans lequel on réalise des zones pourvues de reliefs (2a et 3a) dans chaque feuille, et on assemble chaque feuille libre (101b) à une feuille adjacente (101a) d'un bloc intermédiaire (21) formé par les différentes feuilles assemblées entre elles au préalable, en soudant au moins certaines des zones planes en contact et parfaitement en vis-à-vis (3a et 2b) de cette feuille libre et de cette feuille adjacente avec une source laser, selon une ligne continue (L) parallèle à l'axe des reliefs, **caractérisé en ce qu'**on soude par conduction et **en ce que** ladite source laser est un ensemble de sources laser à diodes (28), dont la longueur d'onde est comprise entre 800 et 1200 nanomètres et qui génère un faisceau laser (29) qu'on dirige vers un miroir (31) pourvu de facettes et animé d'un mouvement de rotation, de façon à générer un segment laser (S), dont la largeur est sensiblement voisine au diamètre de ce faisceau laser (29) et dont la longueur est très supérieure à ce diamètre, et on déplace ce segment laser (S) le long de ladite ligne continue (L).

2. Procédé selon la revendication 1, **caractérisé en ce qu'**on achemine, par des fibres optiques (27), le rayonnement électromagnétique issu de la source laser (28).

3. Procédé selon l'une des revendications 1 à 2, **caractérisé en ce qu'**on réalise les zones pourvues de reliefs en marquant par compression des lignes alternativement sur une première face et une face opposée de la feuille, puis en exerçant de part et d'autre de ces lignes de pliage, des efforts de pression de manière à provoquer le pliage de cette feuille.

4. Procédé selon la revendication 3, **caractérisé en ce qu'**on marque par compression des lignes parallèles à la largeur de la feuille, équidistantes entre elles, puis on exerce de part et d'autre de ces lignes de pliage des efforts de pression dans des directions opposées de manière à provoquer le pliage de la feuille dans le sens longitudinal selon un motif semi-hexagonal puis on découpe cette bande de manière à former différentes feuilles (101).

5. Procédé selon l'une quelconque des revendications précédentes, **caractérisé en ce qu'**on réchauffe chaque feuille libre (101b), avant de la souder à la feuille adjacente (101 a) du bloc intermédiaire (21).

6. Procédé selon l'une quelconque des revendications précédentes, **caractérisé en ce qu'**on presse chaque feuille libre contre la feuille adjacente, pendant l'étape de soudage par laser et immédiatement après cette étape le long de ladite ligne continue.

7. Procédé selon l'une quelconque des revendications précédentes, **caractérisé en ce que** la structure alvéolaire en nid d'abeilles présente une densité inférieure à 80 kg/m³, en particulier à 60 kg/m³, avec des alvéoles dont la plus grande dimension transversale est inférieure à 12 mm.

8. Procédé selon l'une quelconque des revendications précédentes, **caractérisé en ce que** les feuilles (101) sont des feuilles monocouches en matière 100% recyclée contenant du noir de carbone.

9. Installation pour la mise en oeuvre du procédé selon l'une quelconque des revendications 1 à 8, comprenant :
- des moyens de formation de reliefs dans chaque feuille ;
- des moyens de mise en place de chaque feuille libre, au voisinage de la feuille adjacente du bloc intermédiaire ;
- des moyens de soudage au laser par conduction de cette feuille libre avec la feuille adjacente qui comprennent une source laser, ladite source laser étant un ensemble de sources laser à diodes (28), dont la longueur d'onde est comprise entre 800 et 1200 nanomètres générant un faisceau laser (29);
- un miroir (31) pourvu de facettes et animé d'un mouvement de rotation configuré pour recevoir le faisceau laser (29) et générer un segment laser (S), dont la largeur est sensiblement voisine au diamètre du faisceau laser (29) et dont la longueur est très supérieure à ce diamètre ;
- des moyens de mise en pression de chaque feuille libre avec cette feuille adjacente.

10. Installation selon la revendication 9, **caractérisée en ce que** les moyens de mise en pression comprennent des premiers organes de mise en pression, propres à mettre le bloc intermédiaire en contact avec la feuille libre, ainsi qu'un organe de mise en pression complémentaire, propre à pénétrer dans les alvéoles dudit bloc intermédiaire et à accroître la pression entre la feuille libre et la feuille adjacente le long de ladite ligne continue.

## Patentansprüche

1. Verfahren zur Herstellung einer bienenwabenförmigen zellähnlichen Struktur, die von mehreren Bögen (101) eines thermoplastischen Materials gebildet wird, die miteinander verbunden sind, wobei bei dem Verfahren Zonen hergestellt werden, die mit Reliefs (2a und 3a) in jedem Bogen ausgestattet sind, und jeder freie Bogen (101 b) mit einem benachbarten Bogen (101 a) eines Zwischenblocks (21) verbunden wird, der von den verschiedenen, zuvor miteinander verbundenen Bögen gebildet wird, durch Schweißen mindestens bestimmter ebener Zonen im Kontakt und absolut gegenüber (3a und 2b) dieses freien Bogens und dieses benachbarten Bogens mit einer Laserquelle gemäß einer kontinuierlichen Linie (L) parallel zur Achse der Reliefs, **dadurch gekennzeichnet, dass** das Schweißen durch Leitung erfolgt und dass die Laserquelle eine Laserquellengruppe mit Dioden (28) ist, deren Wellenlänge zwischen 800 und 1.200 Nanometern inklusive ist und die ein Laserstrahlenbündel (29) erzeugt, das auf einen Spiegel (31) gelenkt wird, der mit Facetten ausgestattet ist und rotierend bewegt wird, um ein Lasersegment (S) zu erzeugen, dessen Breite etwa dem Durchmesser dieses Laserstrahlenbündels (29) entspriech ist und dessen Länge sehr viel größer ist als dieser Durchmesser, und dieses Lasersegment (S) entlang der kontinuierlichen Linie (L) bewegt wird.

2. Verfahren nach Anspruch 1, **dadurch gekennzeichnet, dass** die elektromagnetische Strahlung der Laserquelle (28) durch optische Fasern (27) befördert wird.

3. Verfahren nach einem der Ansprüche 1 bis 2, **dadurch gekennzeichnet, dass** die relieffreien Zonen durch Markierung durch Druck von Linien abwechselnd auf einer ersten Seite und einer gegenüberliegenden Seite des Bogens hergestellt werden, mit anschließender Ausübung von Druckkräften auf der einen und der anderen Seite dieser Faltlinien, um diesen Bogen zu falten.

4. Verfahren nach Anspruch 3, **dadurch gekennzeichnet, dass** durch Druck parallele und gleichmäßig zueinander beabstandete Linien in der Breite des Bogens markiert werden, dann auf der einen und der anderen Seite dieser Faltlinien Druckkräfte in entgegengesetzte Richtungen ausgeübt werden, um den Bogen in Längsrichtung gemäß einem halbsechseckigen Motiv zu falten und danach diesen Streifen zu schneiden, um verschiedene Bögen (101) zu bilden.

5. Verfahren nach einem der vorangehenden Ansprüche, **dadurch gekennzeichnet, dass** jeder freie Bogen (101 b) vor dem Verschweißen mit dem benachbarten Bogen (101 a) des Zwischenblocks (21) erhitzt wird.

6. Verfahren nach einem der vorangehenden Ansprüche, **dadurch gekennzeichnet, dass** jeder freie Bogen während des Laserschweißschritts und unmittelbar nach diesen Schritt entlang der kontinuierlichen Linie gegen den benachbarten Bogen gepresst wird.

7. Verfahren nach einem der vorangehenden Ansprüche, **dadurch gekennzeichnet, dass** die bienenwabenförmige zellähnliche Struktur eine Dichte unter 80 kg/m³, insbesondere unter 60 kg/m³, aufweist, mit Waben, deren größte transversale Abmessung kleiner als 12 mm ist.

8. Verfahren nach einem der vorangehenden Ansprüche, **dadurch gekennzeichnet, dass** die Bögen (101) einlagige Bögen aus zu 100% recyceltem Material sind, die Carbon Black enthalten.

9. Einrichtung für die Umsetzung des Verfahrens nach einem der Ansprüche 1 bis 8, die umfasst:
- Mittel zur Bildung von Reliefs in jedem Bogen,
- Mittel zur Platzierung jedes freien Bogens in die Nachbarschaft des benachbarten Bogens des Zwischenblocks,
- Laserschweißmittel durch Leitung dieses freien Bogens mit dem benachbarten Boden, die eine Laserquelle umfassen, wobei die Laserquelle ein Gruppe von Laserstrahlen mit Dioden (28) ist, deren Wellenlänge zwischen 800 und 1.200 Nanometer inklusive ist, die ein Laserstrahlenbündel (29) erzeugen,
- einen Spiegel (31), der mit Facetten ausgestattet ist und rotierend bewegt wird, der konfiguriert ist, um das Laserstrahlenbündel (29) zu empfangen und ein Lasersegment (S) zu erzeugen, dessen Breite etwa dem Durchmesser des Laserstrahlenbündels (29) entspricht und dessen Länge sehr viel größer ist als dieser Durchmesser,
- Pressmittel jedes freien Bogens mit diesem benachbarten Bogen.

10. Einrichtung nach Anspruch 9, **dadurch gekennzeichnet, dass** die Druckmittel erste Druckorgane umfassen, die imstande sind, den Zwischenblock mit dem freien Bogen in Kontakt zu versetzen, sowie ein komplementäres Druckorgan, das imstande ist, in die Waben des Zwischenblocks einzudringen und den Druck zwischen dem freien Bogen und dem benachbarten Bogen entlang der kontinuierlichen Linie zu erhöhen.

## Claims

1. A method for manufacturing a cell-like honeycomb structure formed with several sheets (101) of a thermoplastic material assembled together, a method in which areas provided with embossments (2a,3a) are made in each sheet, and each free sheet (101 b) is assembled with an adjacent sheet (101 a) of an intermediate block (21) formed by different sheets assembled together beforehand, by welding at least certain of the planar areas (3a,2b) in contact of this free sheet and of this adjacent sheet with a laser source, along a continuous line (L) parallel to an axis of the embossments, **characterized in that** welding is carried out by conduction and **in that** the laser source is a set of emitters (28) for which the wavelength is comprised between 800 and 1,200 nanometers that generates a laser beam (29) which is directed towards a mirror (31) provided with facets and performing a movement of rotation, so as to generate said laser segment (S), a width of which is substantially close to a diameter of the beam laser (29), and a length of which is much greater than the diameter and this laser segment (S) is moved along said continuous line (L).

2. The method according to claim 1, wherein the electromagnetic radiation from the laser source (28) is transmitted through optical fibers (27).

3. The method according to any one of claims 1 or 2, wherein areas provided with embossments are made by compressively marking lines alternately on a first face and on an opposite face of the sheet, and then by exerting on either side of these folding lines, pressure forces so as to cause folding of this sheet.

4. The method according to claim 3, wherein lines parallel to a width of the sheet equidistant from each other are compressively marked, and then pressure forces are exerted on either side of these folding lines in opposite directions so as to cause the folding of the sheet in the longitudinal direction according to a semi-hexagonal pattern and then this strip is cut out in order to form different sheets (101).

5. The method according to any one of the preceding claims, wherein each free sheet (101 b) is heated up, before welding it to the adjacent sheet (101 a) of the intermediate block (21).

6. The method according to any one of the preceding claims, wherein each free sheet is pressed against the adjacent sheet, during the laser welding step and immediately after this step along said continuous line.

7. The method according to any one of the preceding claims, wherein the cell-like honeycomb structure has a density of less than 80 kg/m³, in particular less than 60 kg/m³, with cells for which a largest transverse dimension is less than 12 mm.

8. The method according to any one of the preceding claims, wherein the sheets (101) are monolayer sheets in 100% recycled material containing carbon black.

9. An installation for applying the method according to any one of claims 1 to 8, comprising:
- means for forming embossments in each sheet;
- means for setting into place each free sheet, in a vicinity of the adjacent sheet of the intermediate block;
- means for laser-welding by conduction this free sheet with the adjacent sheet which comprise a laser source; said laser source being a set of emitters (28) for which the wavelength is comprised between 800 and 1,200 nanometers that generates a laser beam (29);
- a mirror (31) provided with facets and performing a movement of rotation, so as to generate said laser segment (S), a width of which is substantially close to a diameter of the beam laser (29), and a length of which is much greater than the diameter;
- means for applying pressure to each free sheet with this adjacent sheet.

10. Installation according to claim 9, wherein the means for applying pressure comprise first pressure members, capable of putting the intermediate block into contact with the free sheet, as well as an additional pressure member capable of penetrating into the cells of said intermediate block and of increasing the pressure between the free sheet and the adjacent sheet along the continuous line.
